# EUROPÄISCHE PATENTSCHRIFT

(11) **EP 1 544 515 B1**
(45) Veröffentlichungstag und Bekanntmachung des Hinweises auf die Patenterteilung: **27.09.2006**
(21) Anmeldenummer: 04029185.8
(22) Anmeldetag: 09.12.2004
(51) Int. Cl.: F16H 61/18, F16H 63/34

(54) **Arretierelement**
Locking bolt
Moyen de blocage

(30) Priorität: 16.12.2003 DE 10359067
(43) Veröffentlichungstag der Anmeldung: 22.06.2005
(73) Patentinhaber: Schaeffler KG, 91074 Herzogenaurach (DE)
(72) Erfinder: Belatschek, Melanie, 91489 Wilhelmsdorf (DE); Schnapp, Peter, 90431 Nürnberg (DE)

(56) Entgegenhaltungen:
- DE-A1- 3 525 989
- DE-A1- 4 118 930
- DE-A1- 10 059 377

## Beschreibung

### Gebiet der Erfindung

Die vorliegende Erfindung betrifft ein Arretierelement, mit dem ein beweglich angeordnetes Stellelement, beispielsweise eine Schaltstange in einem Schaltgetriebe für Fahrzeuge, lagefixierbar ist, entsprechend dem Oberbegriff des Anspruchs 1 und wie aus der DE 10059377 A bekannt ist.. Das Arretierelement umfasst ein ortsfest in einer Aufnahme eines Bauteils, beispielsweise im Gehäuse des Schaltgetriebes eingepresstes, hohlzylindrisch ausgebildetes Gehäuse, in dem eine Rasthülse längsverschiebbar geführt ist. Die ebenfalls hohlzylindrisch ausgeführte Rasthülse bildet stirnseitig an dem vom Gehäuse abgewandten Ende eine geschlossene Kugelkalotte, die in einer Endlage, einer Arretierstellung, formschlüssig in eine Ausnehmung des Stellelementes verrastet. Zur Erzielung einer kraftschlüssigen Verrastung ist in dem Arretierelement eine Druckfeder integriert, mit der die Rasthülse in Richtung des Stellelementes beaufschlagt ist, wobei zwischen der Rasthülse und dem Gehäuse eine Hubbegrenzung vorgesehen ist.

### Hintergrund der Erfindung

Aus dem Dokument DE 41 18 930 A1 ist ein Arretierelement bekannt, das eine Schaltsperrvorrichtung für ein Wechselgetriebe bildet. Der Aufbau umfasst ein Gehäuse mit einer relativ großen Wandstärke, in dem ein Sperrbolzen längsverschiebbar geführt ist. Zur Erzielung einer kraftschlüssigen Anlage des Sperrbolzens an einer Schaltwelle ist eine Druckfeder innerhalb des Arretierelementes zwischen dem Boden des Gehäuses und einer Stirnseite des Sperrbolzens eingesetzt. Als Lagefixierung des Arretierelementes in dem Getriebegehäuse dient ein erster Tangentialstift, der in eine Aufnahmebohrung des Getriebegehäuses eingesetzt ist und gleichzeitig lokal in eine Aussparung des Gehäuses von dem Arretierelement eingreift. Ein zweiter Tangentialstift ist so in das Arretierelement eingesetzt, dass dieser in eine Bohrung des Gehäuses von dem Arretierelement eingesetzt ist und gleichzeitig in eine Aussparung des Sperrbolzens eingreift. Die Aussparung des Sperrbolzens erstreckt sich dabei über eine Länge, die den Durchmesser des Tangentialstiftes deutlich übertrifft und ermöglicht damit eine Stellbewegung des Sperrbolzens, die von der Länge der Aussparung begrenzt ist. Der Aufbau dieses bekannten Arretierelementes umfasst ausschließlich spangebend hergestellte Bauteile, die alternativ als Gussteile ausgebildet werden können. Damit verbunden ergibt sich ein relativ großer erforderlicher Einbauraum sowie hohe Herstellkosten.

### Zusammenfassung der Erfindung

Die Nachteile des bekannten Standes der Technik berücksichtigend, liegt der Erfindung die Aufgabe zugrunde, ein kostengünstig herstellbares und bauraumoptimiertes Arretierelement zu schaffen, das alle Funktionsanforderungen erfüllt.

Diese Problemstellung wird gemäß der vorliegenden Erfindung durch die Merkmale des Anspruchs 1 gelöst.

Erfindungsgemäß ist in das Gehäuse eine hohlzylindrisch gestaltete, ebenfalls spanlos hergestellte Rasthülse eingesetzt. Zur Erzielung einer optimalen Führung der Rasthülse in dem Gehäuse ist diese in axial getrennten Abschnitten, d. h. an der Innenwandung des Gehäuses und im Bereich der Einschnürung von dem Boden des Gehäuses geführt. Damit stellt sich eine Führung der Rasthülse in zwei unterschiedlichen Durchmesserebenen bzw. Zylinderebenen ein, wodurch die Verkippungsgefahr der Rasthülse gegenüber dem Gehäuse vorteilhaft verringert werden kann. Für die zwei axial voneinander getrennten Führungen der Rasthülse innerhalb des Gehäuses, sind möglichst übereinstimmende Einbauspiele vorgesehen. Das jeweilige Einbauspiel wird dabei so ausgewählt, dass eine Klemmung der Rasthülse im Gehäuse in allen Betriebszuständen unterbunden ist. Andererseits wird das Einbauspiel im Bereich der Führungen in Abhängigkeit von den verwendeten Werkstoffen so klein dimensioniert, dass sich klar definierte Rastpositionen für die Rasthülse des Arretierelements einstellen.

Zur Führung der Rasthülse an der Innenwandung des Gehäuses weist diese in einem aufgeweiteten Bereich, an dem freien Ende, eine radial vorstehende, als Ring ausgebildete schmal dimensionierte Endzone auf. Diese Maßnahme gewährleistet eine gewünschte erfindungsgemäße, axial weit voneinander getrennte Doppelführung der Rasthülse in dem Gehäuse. Unabhängig von der Position, d.h. selbst in einer Neutralposition der Rasthülse, stellt sich ein großer axialer Abstand zwischen den zwei Führungen, den Kontaktzonen ein, die sich zwischen der Rasthülse und dem Gehäuse einstellen. Diese Ausgestaltung bewirkt vorteilhaft eine gegen Verkippung gesicherte, leichtgängige Führung der Rasthülse.

Zur Hubbegrenzung der Rasthülse wird die Einschnürung in dem Boden des Gehäuses genutzt, der eine radiale Stufe der Rasthülse übergreift. In der Neutralstellung, bei einem maximalen Hub stützt sich der gestufte Bereich der Rasthülse unmittelbar an dem Bord des Gehäuses ab.

Die Erfindung ermöglicht die Darstellung eines Arretierelementes, bei dem weder für das Gehäuse noch für die Rasthülse eine Bördelung erforderlich ist. Die Einschnürung, bzw. ein Haltekragen für die Hubbegrenzung und Führung der Rasthülse wird erfindungsgemäß vorteilhaft spanlos, vorzugsweise durch ein Lochen bzw. Stanzen hergestellt, zur Bildung einer Öffnung in dem Boden des Gehäuses. Neben einer als Bord ausgebildeten Einschnürung kann die Öffnung des Bodens weiterhin als umlaufende Kröpfung ausgebildet werden, wobei die einen verlängerten Kragen aufweisende Kröpfung auch als Durchzug zu bezeichnen ist. Unabhängig von der Gestaltung der Öffnung des Bodens ermöglicht die Erfindung die Darstellung einer form- und toleranzoptimierten Einschnürung. Abhängig von den eingesetzten Verfahren kann weiterhin eine Einschnürung selbst bei größeren Wandstärken des Bodens realisiert werden, wodurch sich vorteilhaft eine verlängerte Führung der Rasthülse im Bereich der Einschnürung einstellt.

Weiterhin schließt die Erfindung ein, das Gehäuse wie auch die Rasthülse gleichzeitig zu härten. Falls eine Endbearbeitung erforderlich ist, kann diese an den gehärteten Bauteilen erfolgen. Damit kann das bisher eingesetzte Induktiv-Anlassen bzw. Hochfrequenz-Anlassen entfallen.

Durch die erfindungsgemäßen Maßnahmen, deren Herstellung eine maßgenaue Einschnürung bzw. Haltekragen sicherstellt, in Verbindung mit oder alternativ zu einem gehärteten Gehäuse und einer gehärteten Rasthülse wird die Funktionalität des Arretierelementes verbessert. Außerdem stellt sich eine kostengünstige Herstellung des Arretierelementes ein, das gleichzeitig heutige Kundenforderungen erfüllt.

Eine weitere Funktionsverbesserung des erfindungsgemäßen Arretierelementes ergibt sich durch das gehärtete Gehäuse. Damit kann das Gehäuse vorteilhaft mit einer höheren Einpresskraft eine engere Passung, einer Übergangspassung oder einer Presspassung, beispielsweise in eine Bohrung des Getriebegehäuses dauerhaft sicher positioniert werden, ohne Gefahr einer plastischen Verformung des Gehäuses. Dieser Festsitz kompensiert vorteilhaft nachteilige Toleranzlagen, die eine dauerhafte definierte Einbaulage verhindern oder nachteilig die Funktion des Arretierelementes beeinflussen. Gleichzeitig ermöglicht das gehärtete Gehäuse durch eine Stanzung im Boden eine Öffnung einzubringen.

Ein für die Funktion des Arretierelementes erforderliches Einbauspiel zwischen der Rasthülse und dem Gehäuse sieht vor, dass dieses 5 0,35 mm beträgt. Das Einbauspiel "S₁" zwischen der Kröpfung oder dem Bord des Gehäuses und der Rasthülse stimmt vorteilhaft überein mit dem Einbauspiel "S₂", welches sich zwischen der Endzone des gestuften, radial nach außen gerichteten Bereichs der Rasthülse und der Innenwandung des Gehäuses einstellt.

Ein weiteres Einbauspiel "S₃", welches sich zwischen der Endzone des gestuften, radial nach außen gerichteten Bereichs der Rasthülse und der Einschnürung des Gehäuses einstellt übertrifft maßlich das Einbauspiel "S₁ bzw. "S₂".

Das spanlose Verfahren zur Herstellung des Gehäuses und der Rasthülse ermöglicht ohne eine Nacharbeit die Einhaltung des Einbauspiels sowohl zwischen der Innenwandung des Gehäuses und dem radial aufgeweiteten Abschnitt der Rasthülse als auch zwischen der Einschnürung des Gehäuses und der Rasthülse. Das vorteilhaft eng ausgelegte Einbauspiel zwischen den Führungsabschnitten des Arretierelementes vermeidet eine Verkippung der Rasthülse gegenüber dem Gehäuse und gewährleistet eine optimale Funktion des Arretierelemntes.

Zur Härtung des Gehäuses und der Rasthülse wird gemäß der Erfindung bevorzugt ein Einsatzhärten vorgesehen. Bei diesem zur Erzielung einer gehärteten Oberfläche eingesetzte Verfahren, diffundiert Kohlenstoff von einem Kohlenstoff abgebenden Mittel in das zu härtende Bauteil und reichert die Randschicht an, so dass durch ein abschließendes Abschrecken sich die geforderte Härtung an der Oberfläche des betreffenden Bauteils einstellt. Das einsatzgehärtete, eine verbesserte Steifigkeit aufweisende Gehäuse kann mit einer erhöhten Einpresskraft in eine Aufnahme, beispielsweise eine Bohrung des Getriebegehäuses eingepresst werden, zur Erzielung eines sicheren Festsitzes. Andererseits kann in das einsatzgehärtete Gehäuse durch Stanzen in den Boden eine exakte, rissfreie, maßlich exakt abgestimmte Öffnung eingebracht werden, an deren Randzone bzw. Einschnürung die Rasthülse geführt ist. Gemäß der Erfindung ist die das einsatzgehärtete Gehäuse vorteilhaft mit einer entsprechend gehärteten Rasthülse kombinierbar.

Ein weiteres bevorzugtes Ausgestaltungsmerkmal der Erfindung bezieht sich auf die Einbaulage der Druckfeder. Zur Verlängerung der Federlänge, der mit einem Federende in der Rasthülse zentrierten Druckfeder ist das zweite Federende der Druckfeder unmittelbar an dem Bauteil abstützt, in dessen Aufnahme das Arretierelement eingepresst ist. Dazu ist das gehärtete Gehäuse mit einem rohrförmigen Endabschnitt ohne inneren Anschlag für die Druckfeder in eine Bohrung des Bauteils, beispielsweise eines Getriebegehäuses eingepresst. In der Einbaulage ist das Federende an einer stirnseitigen Auflage des Bauteils abgestützt.

Eine alternative Ausgestaltung der Druckfeder weist an dem von der Rasthülse abgewandten Ende ein konisch nach außen gerichtetes Federende auf, dessen Endwindung an der Innenwandung des Gehäuses geführt ist. Damit stellt sich eine Zentrierung beider Federenden innerhalb des Arretierelementes ein, verbunden mit einer geradlinigen Krafteinleitung, die eine Verkippungsgefahr der Rasthülse unterbindet.

Die Erfindung schließt außerdem ein Arretierelement ein, bei dem die Druckfeder gehäuseseitig mit einem Halteelement zusammenwirkt. Dazu ist das Halteelement endseitig an der Innenwandung des Gehäuses fixiert und gewährleistet eine zentrierte Einbaulage der Druckfeder. Bevorzugt steht das Halteelement mit einer Haltesicherung in Verbindung, die bei komplettiertem Arretierelement die Druckfeder verliergesichert im Arretierelement positioniert und damit gleichzeitig eine wirksame Transportsicherung darstellt. Das Halteelement ist vorteilhaft mit einem Sicherungsclip versehen, der bis zu einer definierten Haltekraft die Druckfeder gegenüber dem Gehäuse positioniert. Im eingebauten Zustand löst sich der Halteclip bei einer ersten Hubbewegung der Rasthülse gegenüber dem Gehäuse und weicht dabei aus, wodurch sich das Federende der Druckfeder an der Auflage des Bauteils abstützen kann, in dem das Gehäuse eingepresst ist. Durch den Halteclip wird die Funktion des Arretierelementes nicht behindert.

Gemäß der Erfindung bietet sich außerdem ein scheibenartig gestaltetes Halteelement an, das mit einer begrenzten Haltekraft an der Innenwandung des Gehäuses abgestützt ist. Im Betriebszustand, bei einer Verschiebung der Rasthülse und einer damit erhöhten Abstützkraft der Druckfeder an dem Halteelement wird dieses axial bis zur Auflage an dem Bauteil verschoben, in dem das Arretierelement eingepresst ist. Vorteilhaft ist das Halteelement druckfederseitig mit einem Zentrierzapfen versehen, der die Einbaulage der Druckfeder definiert.

Als Halteelement bietet es sich vorteilhaft an, ein aus Kunststoff hergestelltes Ringelement in das Gehäuse einzupressen, mit dem ein Federende der Druckfeder zentriert und verliergesichert ist. Alternativ schließt die Erfindung beispielsweise aus Blech geformte Ringelemente ein. Die lagefixierte Einbaulage des Halteelementes kann bevorzugt mittels einer Klebung unterstützt werden.

Die Erfindung sieht außerdem vor, dass die Druckfeder mit einem Federende an einem spanlos angeformten Bord des Gehäuses abgestützt ist. Weiterhin bietet es sich gemäß der Erfindung an, das Gehäuse einstückig mit einem Kragen zu versehen, der zur Anlage einer in die Rasthülse eingesetzten Scheibe bestimmt ist. Diese Scheibe ist dabei zur Abstützung der Druckfeder bestimmt.

Der Aufbau des erfindungsgemäßen Arretierelementes, das mittels eines Pressverbandes sicher einpressbar ist, und das eine für die Funktion wichtige große Federlänge der Druckfeder aufweist, kann mit dem Halteelement, als eine vorkomplettierbare Baueinheit zusammengefügt werden.

### Kurze Beschreibung der Zeichnungen

Zwei Ausführungsbeispiele der Erfindung sind in den Figuren dargestellt. Es zeigen:
- Figur 1: in einem Längsschnitt ein erfindungsgemäßes Arretierelement, bei dem die integrierte Druckfeder unmittelbar an einem Bauteil abgestützt ist, in das das Arretierelement eingepresst ist;
- Figur 2: ein Arretierelement, versehen mit einer zylindrisch gestalteten Druckfeder, das an einem Ende mit einem Halteelement zusammenwirkt;
- Figur 3: das Arretierelement gemäß Figur 2, mit einem alternativ gestalteten Halteelement;
- Figur 4: eine alternative Abstützung eines Federende der Druckfeder des Arretierelementes an einem Bord des Gehäuses;
- Figur 5: die Abstützung eines Federende der Druckfeder an einer Scheibe, die an einem Kragen des Gehäuses fixiert ist;
- Figur 6: in einer Schnittdarstellung das Gehäuse in Verbindung mit der Rasthülse;
- Figur 7: in einer vergrößerten Darstellung einen Ausschnitt eines erfindungsgemäßen Arretierelementes, das insbesondere die Führungsbereiche zwischen dem Gehäuse und der Rasthülse darstellt.

### Detaillierte Beschreibung der Zeichnungen

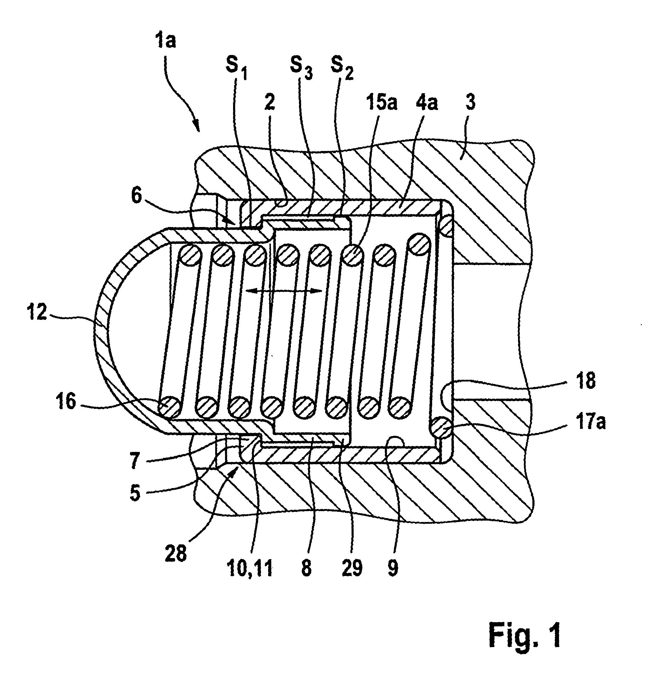

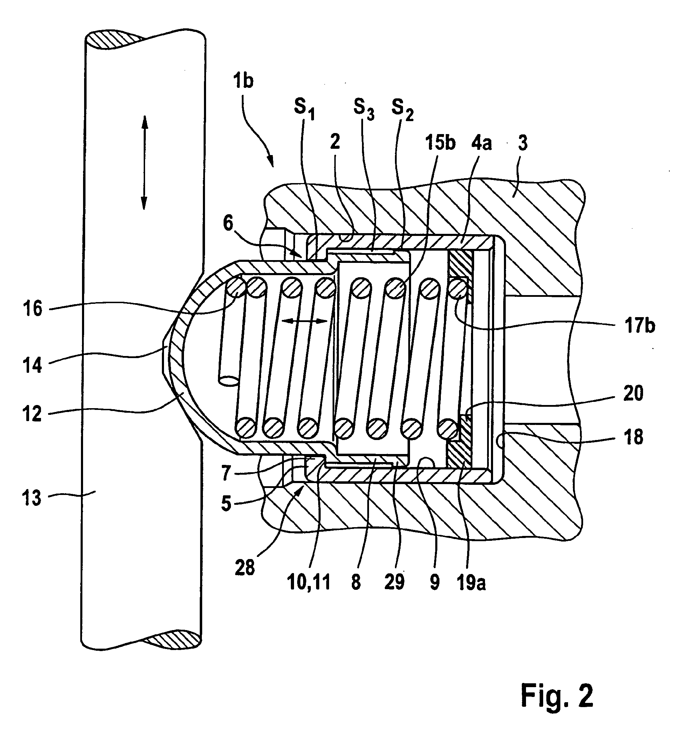

Die Figur 1 zeigt das Arretierelement 1a in einer Einbaulage, bei der dieses in eine Aufnahme 2, einer Bohrung in einem Bauteil 3 eingepresst ist. Das Arretierelement 1a umfasst ein topartig gestaltetes Gehäuse 4a, dessen Außenkontur bzw. Mantelfläche bevorzugt einsatzgehärtet ist, damit das Arretierelement 1a mit einer vergrößerten Einpresskraft ohne eine plastische Verformung des Gehäuses 4a in die Aufnahme 2 eingepresst werden kann. Das topfartig ausgebildete Gehäuse 4a bildet einen Boden 5, in dem durch eine Stanzung zentrisch eine als Öffnung 6 ausgebildete Einschnürung 28 eingebracht ist, die außenseitig von einem Bord 7 begrenzt ist. In dem Gehäuse 4a ist eine Rasthülse 8 gleitgelagert verschiebbar eingesetzt. Die ebenfalls einen Hohlkörper bildende Rasthülse 8 weist eine Stufe 10 auf, die in Verbindung mit dem Bord 7 des Bodens 5 eine Hubbegrenzung 11 bildet. Stirnseitig an dem vom Bauteil 3 abgewandten Ende weist die Rasthülse 8 eine Kugelkalotte 12 auf, die gemäß Figur 2 zur Lagefixierung eines axial bewegbaren Stellelementes 13 in einer Endlage formschlüssig in eine korrespondierende Ausnehmung 14 verrastet.

Die Rastehülse 8 ist unter Einhaltung von Einbauspielen "S₁, S₂, S₃" in dem Gehäuse 4a geführt. Das Einbauspiel "S₁" stellt sich im Bereich der Einschnürung 28 zwischen dem Bord 7 und der Rasthülse 8 ein. Über eine radial aufgeweitete, endseitig nach außen gerichtete ringförmige Endzone 29 ist die Rasthülse 8 mit dem Einbauspiel "S₂" der Innenwandung 9 des Gehäuses 4a zugeordnet. Für die Einbauspiele "S₁, S₂" ist ein Maß von ≤ 0,35 mm vorgesehen. Das weitere, das Maß der Einbauspiele "S₁, S₂" übertreffende Einbauspiel "S₃" ist in dem Bereich zwischen der Einschnürung 28 dem Bord 7 des Gehäuses 4a und der Endzone 29 vorgesehen.

Mittels einer im Arretierelement 1a integrierten Druckfeder 15a wird die Rasthülse 8 kraftbeaufschlagt. Ein erstes Federende 16 ist dabei unmittelbar in der Rastehülse 8 zentriert. Über ein zweites Federende 17a stützt sich die Druckfeder 15a an einer Auflage 18 des Bauteils 3 ab. Eine exakte Einbaulage der Druckfeder 15a sichernd, ist das Federende 17a konisch gestaltet, so dass die Druckfeder 15a mit einem Federende an der Innenwandung 9 des Gehäuses 4a geführt ist.

Die Figur 2 zeigt das Arretierelement 1b mit einem bis auf die Druckfeder 15b übereinstimmenden Aufbau des Arretierelementes 1a gemäß Figur 1. Die Beschreibung der Figur 2 stützt sich dabei ausschließlich auf die Unterschiedsteile gegenüber dem Arretierelement 1a. Die Druckfeder 15b, mit der die Rasthülse 8 kraftschlüssig in die Ausnehmung 14 des Stellelementes 13 verrastet ist in dem Gehäuse 4a in einem Halteelement 19 geführt. Das bevorzugt aus Kunststoff hergestellte, an der Innenwandung 9 des Gehäuses 4a lagefixierte Halteelement 19 ermöglicht den Einsatz einer ausschließlich zylindrisch gewickelten Druckfeder 15b. Das Halteelement 19 ist mit zumindest einem Halteclip 20 auf der zum Bauteil 3 gerichteten Seite versehen, der einen Axialanschlag für das Federende 17b der Druckfeder 15b bildet. Vorteilhaft bildet der Halteclip 20 eine Transportsicherung, d. h. eine lagefixierte Anordnung der Druckfeder 15b nach Komplettierung des Arretierelementes 1b. Der eine begrenzte Haltekraft bildende Halteclip 20 ist so ausgeführt, dass im eingebauten Zustand beispielsweise bei einer ersten Hubbewegung, d. h. einer Stellbewegung der Rasthülse 8 in Richtung des Bauteils 3 der Halteclip 20 ausweicht und damit eine Abstützung des Federendes 17b an der Auflage 18 des Gehäuses 3 ermöglicht.

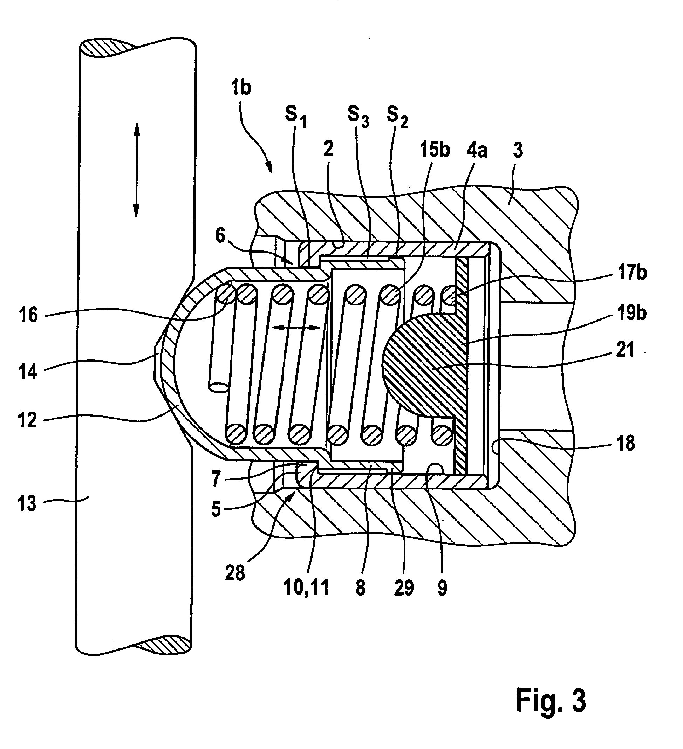

In der Figur 3 ist das Arretierelement 1b abgebildet, versehen mit einem scheibenartig gestalteten Halteelement 19b, das mit einer begrenzten Haltekraft an der Innenwandung 9 des Gehäuses 4a abgestützt ist. Bei einer Verschiebung der Rasthülse 8 und einer damit erhöhten Abstützkraft der Druckfeder 15b an dem Halteelement 19b wird dieses axial bis zur Auflage 18 an dem Bauteil 3 verschoben in dem das Arretierelement 1c eingepresst ist. Zur Erzielung einer definierten Einbaulage der Druckfeder 15b ist das Halteelement 19b druckfederseitig mit einem Zentrierzapfen 21 versehen, der formschlüssig von dem Federende 17b der Druckfeder 15b umschlossen wird.

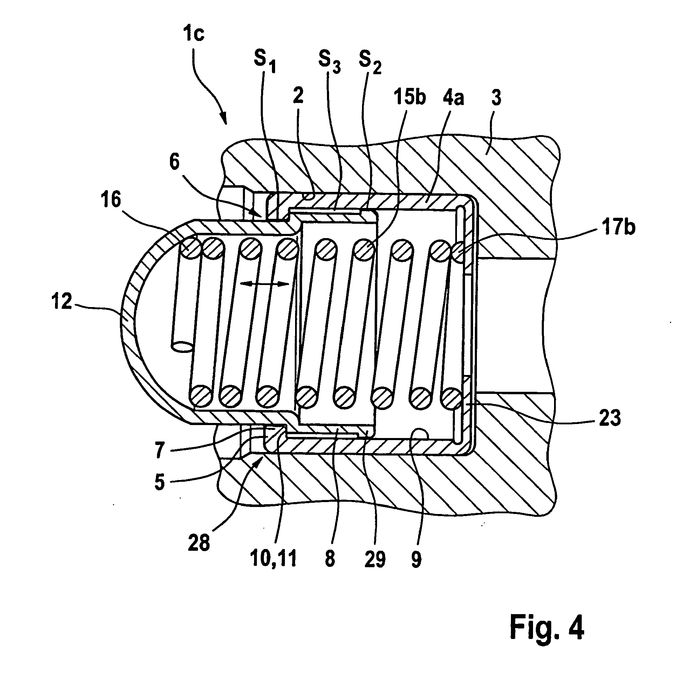

Die Figur 4 zeigt das Arretierelement 1c dessen Druckfeder 15b mit dem Federende 17b an einem spanlos an dem Gehäuse 4a angeformten Bord 23 abgestützt ist.

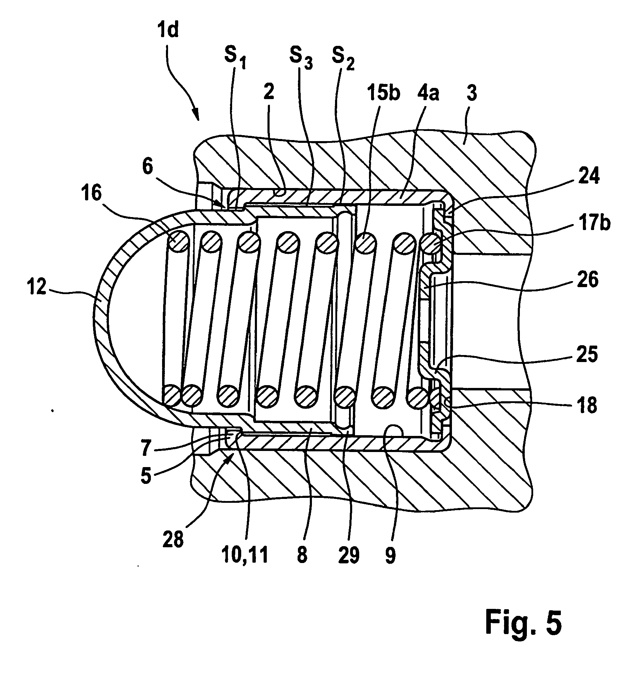

Gemäß Figur 5 umfasst das Arretierelement 1d eine Druckfeder 15b, bei der das Federende 17b einer Scheibe 25 zugeordnet, die an einem Kragen 24 des Gehäuses 4a lagefixiert ist. an der mittig angeordneten Zentrierung 26 der Scheibe 25 ist die Druckfeder 15b positioniert.

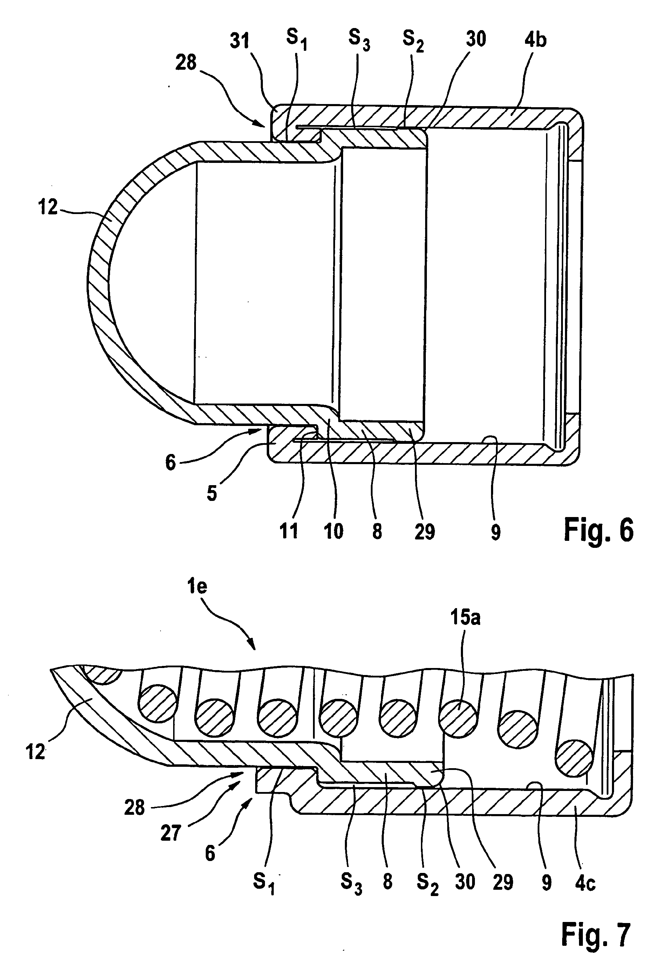

Die Figur 6 zeigt das Gehäuse 4b in Verbindung mit der Rasthülse 8, bei der zur Bildung einer Einschnürung 28 das Gehäuse 4b endseitig eine Doppelung 31 umfasst. Durch die spanlos an das Gehäuse 4b angeformte Doppelung 31 stellt sich eine Hubbegrenzung für die Rasthülse 8 ein. Die Figur 6 zeigt weiterhin die Endzone 29 in dem radial aufgeweiteten Bereich der Rasthülse 8, die in der Einbaulage an der Innenwandung 9 des Gehäuses 4b abgestützt ist. Die Endzone 29 ist unabhängig von der Stellung der Rasthülse 8 jeweils axial beabstandet von der weiteren Führung der Rasthülse 8 in dem Gehäuse 4b, welche sich im Bereich der als Doppelung 31 ausgebildeten Einschnürung 28 einstellt. Diese in allen Einbaupositionen axial getrennte Doppelführung der Rasthülse 8 verringert entscheidend eine nachteilige Verkippung und bewirkt gleichzeitig eine gewünschte leichtgängige Verschiebung der Rasthülse 8 gegenüber dem Gehäuse 4b. Das für die Funktion erforderliche Einbauspiel "S₁, S₂," im Bereich jeder Führung ist zueinander weitestgehend maßlich übereinstimmend ausgelegt. Das weitere Einbauspiel "S₃" zwischen der Endzone 29 und der Einschnürung 28 übertrifft maßlich die Einbauspiele "S₁, S₂".

Das in Figur 7 teilweise abgebildete Arretierelement 1e schließt ein Gehäuse 4c ein, dass im Bereich der Öffnung eine als Kröpfung 27 ausgebildete Einschnürung 28 aufweit, an der die Rasthülse 8 unter Einhaltung des Einbauspiels "S₁" geführt ist. Vergleichbar der Doppelung 21 gemäß Figur 6 bildet ebenfalls die Kröpfung 27 eine gewünschte verlängerte axiale Führung der Rasthülse 8, die innerhalb des Gehäuses 4c über die Endzone 29 längenbegrenzt der Innenwandung 9 mit dem Einbauspiels "S₂" zugeordnet ist. Die Rasthülse 8 weist stirnseitig am Außenumfang im Bereich der Endzone 29 einen Radius 30 auf, der als weitere unterstützende Maßnahme eine nachteilige Klemmung der Rasthülse 8 innerhalb des Gehäuses 4c verhindert. Die vergrößerte Darstellung des Arretierelement 1e verdeutlicht das gegenüber den Einbauspielen "S₁, S₂" deutlich größere Einbauspiel "S₃".

### Bezugszahlen

- 1a: Arretierelement
- 1b: Arretierelement
- 1c: Arretierelement
- 1d: Arretierelement
- 1e: Arretierelement
- 2: Aufnahme
- 3: Bauteil
- 4a: Gehäuse
- 4b: Gehäuse
- 4c: Gehäuse
- 5: Boden
- 6: Öffnung
- 7: Bord
- 8: Rasthülse
- 9: Innenwandung
- 10: Stufe
- 11: Hubbegrenzung
- 12: Kugelkalotte
- 13: Stellelement
- 14: Ausnehmung
- 15a: Druckfeder
- 15b: Druckfeder
- 16: Federende
- 17a: Federende
- 17b: Federende
- 18: Auflage
- 19a: Halteelement
- 19b: Halteelement
- 20: Halteclip
- 21: Halteclip
- 22: Zentrierzapfen
- 23: Bord
- 24: Kragen
- 25: Scheibe
- 26: Zentrierung
- 27: Kröpfung
- 28: Einschnürung
- 29: Endzone
- 30: Radius
- 31: Doppelung

- "S₁": Einbauspiel
- "S₂": Einbauspiel
- "S₃": Einbauspiel

## Patentansprüche

1. Arretierelement, bestimmt zur Lagefixierung und / oder Betätigung eines beweglichen Stellelementes (13), beispielsweise einer Schaltstange in einem Schaltgetriebe für Fahrzeuge, umfassend ein ortsfest in eine Aufnahme (2) eines Bauteils (3) angepresstes, hohlzylindrisches Gehäuse (4a bis 4c), in dem eine stirnseitig eine Kugelkalotte (12) bildende Rasthülse (8) gleitgelagert und längsverschiebbar geführt ist, wobei die Kugelkalotte (12) in einer Arretierstellung formschlüssig in eine Ausnehmung (14) des Stellelementes (13) kraftschlüssig verrastet und dazu eine in dem Arretierelement (1a bis 1e) integrierte Druckfeder (15a, 15b) gegen die Rasthülse (8) vorgespannt ist und zwischen der Rasthülse (8), und dem Gehäuse (4) eine Hubbegrenzung (11) vorgesehen ist, wobei ein Boden (5) des topfartig gestalteten, spanlos hergestellten, gehärteten Gehäuse (4a bis 4c) eine Öffnung (6) aufweist, deren Randzone eine als Kröpfung (27) oder als Bord (7) ausgebildete Einschnürung (28) umfasst, und **dadurch gekennzeichnet, dass** die einen Hohlkörper bildende, spanlos hergestellte Rasthülse (8) an der Einschnürung (28) sowie an einer Innenwandung (9) des Gehäuses (4) geführt ist, und dabei die Rasthülse (8) über eine radial vorstehende, endseitig einer nach außen gerichteten Stufe (10) zugeordneten Endzone (29) an der Innenwandung (9) des Gehäuses (4) abgestützt ist und als Hubbegrenzung (11) die radial nach innen gerichtete Einschnürung (28) des Gehäuses (4a bis 4c) die Stufe (10) der Rasthülse (8) übergreift.

2. Arretierelement nach Anspruch 1, wobei der Bord (7) in dem Boden (5) des Gehäuses (4a) eine durch Stanzen eingebrachte Öffnung (6) begrenzt.

3. Arretierelement nach Anspruch 1, bei dem die Kröpfung (27) durch Stanzen oder ein Tiefziehverfahren spanlos in den Boden (5) des Gehäuses (4c) eingebracht ist.

4. Arretierelement nach Anspruch 1, bei dem die Endzone (29) der nach außen gerichteten Stufe (10) der Rasthülse (8) stirnseitig an einem Außenumfang einen Radius (30) oder eine Phase bildet.

5. Arretierelement nach Anspruch 1, bei dem ein Einbauspiel "S₁, S₂" von ≤ 0,35 mm zwischen der Rasthülse (8) und der Kröpfung (27) oder dem Bord (7) im Bereich des Bodens (5) einerseits und der Innenwandung (9) des Gehäuses (4a bis 4c) andererseits vorgesehen ist.

6. Arretierelement nach Anspruch 1, wobei sich ein im Abschnitt zwischen der Einschnürung (28) und der Endzone (29) einstellendes Einbauspiel "S₃" zwischen der Rasthülse (8) und dem Gehäuses (4a bis 4c) das Einbauspiel "S₁ bzw. S₂" übertrifft.

7. Arretierelement nach Anspruch 1, bei dem das Gehäuse (4a bis 4c) außenseitig vollständig einsatzgehärtet ist.

8. Arretierelement nach Anspruch 1, deren Rasthülse (8) zumindest bereichsweise einsatzgehärtet ist.

9. Arretierelement nach Anspruch 1, deren Gestaltung und Auslegung eine gleichzeitige Härtung des Gehäuse (4a bis 4c) und der Rasthülse (8) ermöglicht.

10. Arretierelement nach Anspruch 1, wobei die Druckfeder (15a) in der Einbaulage mit einem ersten Federende (16) in der Rasthülse (8) geführt ist und ein zweites Federende (17a) stirnseitig an einer Auflage (18) des Bauteils (3) abgestützt ist, in dessen Aufnahme (2) das Arretierelement (1a) eingepresst ist.

11. Arretierelement nach Anspruch 10, bei dem die Druckfeder (15a) mit einem konisch gestalteten Federende (17a) an der Innenwandung (9) des Gehäuses (4a) geführt ist.

12. Arretierelement nach Anspruch 1, deren Druckfeder (15b) mit einem an dem Gehäuse (4a) lagefixierten Halteelement (19a) zusammenwirkt, mit dem die Druckfeder (15b) zentriert und ein Halteclip (20) des Halteelementes (19a) eine Transportsicherung und gleichzeitig eine verliergesicherte Anordnung der Druckfeder (15b) in dem Gehäuse (4a) ermöglicht.

13. Arretierelement nach Anspruch 1, wobei der Druckfeder (15b) ein in dem Gehäuse (4a) lagefixiertes Halteelement (19b) mit einem Zentrierzapfen (21) zugeordnet ist.

14. Arretierelement nach Anspruch 12 oder nach Anspruch 13, die ein aus Kunststoff hergestelltes, ein Ringelement bildendes Halteelement (19a,19b), einschließt, das an der Innenwandung (9) des Gehäuses (4a) lagepositioniert ist.

15. Arretierelement nach Anspruch 1, wobei die Druckfeder (15b) mit dem Federende (17b) an einem einstückig mit dem Gehäuse (4a) verbundenen Bord (23) abgestützt ist.

16. Arretierelement nach Anspruch 1, deren Gehäuse (4a) einen Kragen (24) aufweist, an dem eine Scheibe (25) abgestützt ist, die mit der Druckfeder (15b) zusammenwirkt.

17. Arretierelement nach Anspruch 1, das spanlos, bevorzugt durch ein Tiefziehverfahren hergestellte Bauteile, Gehäuse (4a bis 4c) und Rasthülse (8) einschließt, die ohne Nacharbeit gemeinsam mit der Druckfeder (15a, 15b) zu einer Baueinheit, dem Arretierelement (1a, 1b) komplettierbar sind.

## Claims

1. Locking element, intended for fixing the position and/or actuating a moveable control element (13), such as a gearshift rod in a motor vehicle manual shift transmission, comprising a hollow cylindrical housing (4a to 4c), which is immovably pressed into a mounting (2) of a component (3) and in which a stop sleeve (8), forming a spherical cap (12) at the end, is slide-mounted and guided so that it is longitudinally displaceable, the spherical cap (12) in a locking position latching positively under force-closures in a recess (14) of the control element (13), and a compression spring (15a, 15b) integrated into the locking element (1a to 1e) for this purpose being preloaded against the stop sleeve (8), whilst a travel-limiting stop (11) is provided between the stop sleeve (8) and the housing (4), a base (5) of the hardened canister-shaped housing (4a to 4c), manufactured by a chipless forming process, having an opening (6), the edge zone of which comprises a neck (28) in the form of an offset (27) or a rim (7), **characterized in that** the stop sleeve (8), made by a chipless forming process and forming a hollow body, is guided on the neck (28) and on an inner wall (9) of the housing (4), the stop sleeve (8) being supported on the inner wall (9) of the housing (4) by way of a radially protruding end zone (29), associated at the end with an outward facing step (10), and the neck (28) of the housing (4a to 4c) facing radially inwards engaging over the step (10) of the stop sleeve (8) as a travel-limiting stop (11).

2. Locking element according to Claim 1, **characterized in that** the rim (7) in the base (5) of the housing (4a) defines an opening (6) introduced by punching.

3. Locking element according to Claim 1, **characterized in that** the offset (27) is introduced into the base (5) of the housing (4c) by a chipless forming process, either by punching or by a deep drawing process.

4. Locking element according to Claim 1, **characterized in that** the end zone (29) of the outward facing step (10) in the stop sleeve (8) at the end forms a radius (30) or a phase on an outer circumference.

5. Locking element according to Claim 1, **characterized in that** a fitting clearance "S₁, S₂" of ≤ 0.35 mm is provided between the stop sleeve (8) and the offset (27) or the rim (7) in the area of the base (5) on the one hand and the inner wall (9) of the housing (4a to 4c) on the other.

6. Locking element according to Claim 1, **characterized in that** a fitting clearance "S₃" between the stop sleeve (8) and the housing (4a to 4c) occurring in the section between the neck (28) and the end zone (29) exceeds the fitting clearance "S₁ or S₂".

7. Locking element according to Claim 1, **characterized in that** externally the housing (4a to 4c) is entirely case-hardened.

8. Locking element according to Claim 1, **characterized in that** the stop sleeve (8) thereof is case hardened, at least in some areas.

9. Locking element according to Claim 1, **characterized in that** the configuration and design thereof permits simultaneous hardening of the housing (4a to 4c) and the stop sleeve (8).

10. Locking element according to Claim 1, **characterized in that** in the fitted position a first spring end (16) serves to guide the compression spring (15a) in the stop sleeve (8), and a second spring end (17a) is supported at the end on a seat (18) on the component (3), into the seat (2) of which the locking element (1a) is pressed.

11. Locking element according to Claim 10, **characterized in that** the compression spring (15a) is guided by a conical spring end (17a) on the inner wall (9) of the housing (4a).

12. Locking element according to Claim 1, **characterized in that** the compression spring (15b) thereof interacts with a retaining element (19a) fixed to the housing (4a), said element centring the compression spring (15b) and a retaining clip (20) of the retaining element (19a) providing security during transport and at the same time preventing the compression spring (15b) arranged in the housing (4a) from becoming detached.

13. Locking element according to Claim 1, **characterized in that** a retaining element (19b), immovably fixed in the housing (4a) and having a centring spigot (21) is assigned to the compression spring (15b).

14. Locking element according to Claim 12 or Claim 13, **characterized in that** it encloses a retaining element (19a, 19b) made of plastics and forming an annular element, said retaining element being positioned on the inner wall (9) of the housing (4a).

15. Locking element according to Claim 1, **characterized in that** the compression spring (15b) is supported by the spring end (17b) on a rim (23) integrally joined to the housing (4a).

16. Locking element according to Claim 1, **characterized in that** the housing (4a) thereof has a collar (24), which supports a disc (25), which interacts with the compression spring (15b).

17. Locking element according to Claim 1, **characterized in that** it encloses the housing (4a to 4c) and the stop sleeve (8), manufactured by a chipless forming process, preferably a deep drawing process, these components without any finishing work being assembled together with the compression spring (15a, 15b) to form one unit, the locking element (1a, 1b).

## Revendications

1. Élément de blocage conçu pour le blocage en position et/ou l'actionnement d'un élément de positionnement mobile (13), par exemple une tringle de changement de vitesse dans un mécanisme de changement de vitesse pour véhicules, comprenant un boîtier cylindrique creux (4a à 4c) enfoncé en position fixe dans un logement (2) d'un composant (3) dans lequel une douille d'enclenchement (8) formant une calotte sphérique (12) du côté frontal est guidée sur un palier lisse et de manière à pouvoir coulisser dans le sens de la longueur, la calotte sphérique (12) s'enclenchant par engagement géométrique dans une position de blocage dans un creux (14) de l'élément de positionnement (13) et un ressort de compression (15a, 15b) intégré dans l'élément de blocage (1a à 1e) étant précontraint à cet effet contre la douille d'enclenchement (8) et un limiteur de course (11) étant prévu entre la douille d'enclenchement (8) et le boîtier (4), un fond (5) du boîtier (4a à 4c) trempé, fabriqué sans enlèvement de copeaux, configuré en forme de pot, présentant une ouverture (6) dont la zone de bordure comprend un étranglement (28) réalisé sous la forme d'un coude (27) ou d'un bord (7) et **caractérisé en ce que** la douille d'enclenchement (8) fabriquée sans enlèvement de copeaux et formant un corps creux est guidée au niveau de l'étranglement (28) ainsi que sur une paroi intérieure (9) du boîtier (4), et la douille d'enclenchement (8) est ici soutenue au niveau de la paroi intérieure (9) du boîtier (4) par le biais d'une zone d'extrémité (29) faisant saillie dans le sens radial associée du côté de l'extrémité à un palier (10) dirigé vers l'extérieur et, en tant que limiteur de course (11), l'étranglement (28) du boîtier (4a à 4c) dirigé vers l'intérieur dans le sens radial recouvre le palier (10) de la douille d'enclenchement (8).

2. Élément de blocage selon la revendication 1, le bord (7) dans le fond (5) du boîtier (4a) délimitant une ouverture (6) aménagée par poinçonnage.

3. Élément de blocage selon la revendication 1, avec lequel le coude (27) est aménagé dans le fond (5) du boîtier (4c) par poinçonnage ou emboutissage sans enlèvement de copeaux.

4. Élément de blocage selon la revendication 1, avec lequel la zone d'extrémité (29) du palier (10) dirigé vers l'extérieur de la douille d'enclenchement (8) forme du côté frontal sur un pourtour extérieur un rayon (30) ou une phase.

5. Élément de blocage selon la revendication 1, avec lequel un jeu de montage « S₁, S₂ » ≤ 0,35 mm est prévu entre la douille d'enclenchement (8) et le coude (27) ou le bord (7) dans la zone du fond (5) d'un côté et la paroi intérieure (9) du boîtier (4a à 4c) de l'autre côté.

6. Élément de blocage selon la revendication 1, un jeu de montage « S₃ » qui s'établit entre l'étranglement (28) et la zone d'extrémité (29) dépasse le jeu de montage « S₁ ou S₂ » entre la douille d'enclenchement (8) et le boîtier (4a à 4c).

7. Élément de blocage selon la revendication 1, avec lequel le boîtier (4a à 4c) est entièrement cémenté et trempé du côté extérieur.

8. Élément de blocage selon la revendication 1, dont la douille d'enclenchement (8) est cémentée et trempée au moins par zones.

9. Élément de blocage selon la revendication 1, dont la configuration et la conception permet la trempe simultanée du boîtier (4a à 4c) et de la douille d'enclenchement (8).

10. Élément de blocage selon la revendication 1, le ressort de compression (15a) étant guidé dans la douille d'enclenchement (8) en position de montage avec une première extrémité de ressort (16) et une deuxième extrémité de ressort (17a) s'appuyant du côté frontal sur un appui (18) du composant (3) dans le logement (2) duquel est enfoncé l'élément de blocage (1a).

11. Élément de blocage selon la revendication 10, avec lequel le ressort de compression (15a) est guidé avec une extrémité de ressort (17a) de forme conique sur la paroi intérieure (9) du boîtier (4a).

12. Élément de blocage selon la revendication 1, dont le ressort de compression (15b) agit conjointement avec un élément de maintien (19a) en position fixe sur le boîtier (4a), avec lequel le ressort de compression (15b) est centré et un clip de maintien (20) de l'élément de maintien (19a) permet un blocage de transport et en même temps une disposition imperdable du ressort de compression (15b) dans le boîtier (4a).

13. Élément de blocage selon la revendication 1, le ressort de compression (15b) étant associé à un élément de maintien (19b) muni d'un tenon de centrage (21) en position fixe dans le boîtier (4a).

14. Élément de blocage selon la revendication 12 ou selon la revendication 13, lequel inclut un élément de maintien (19a, 19b) fabriqué en matière plastique et formant un élément annulaire qui est positionné sur la paroi intérieure (9) du boîtier (4a).

15. Élément de blocage selon la revendication 1, le ressort de compression (15b) s'appuyant sur un bord (23) relié d'un seul tenant avec le boîtier (4a).

16. Élément de blocage selon la revendication 1, dont le boîtier (4a) présente un collet (24) sur lequel s'appuie un disque (25) qui agit conjointement avec le ressort de compression (15b).

17. Élément de blocage selon la revendication 1, lequel inclut des composants fabriqués sans enlèvement de copeaux, de préférence par emboutissage, un boîtier (4a à 4c) et une douille d'enclenchement (8) qui peuvent être complétés communément sans reprise avec les ressorts de compression (15a, 15b) en un sous-ensemble, l'élément de blocage (1a, 1b).
